# EUROPÄISCHE PATENTSCHRIFT

(11) **EP 3 849 298 B1**
(45) Veröffentlichungstag und Bekanntmachung des Hinweises auf die Patenterteilung: **31.07.2024**
(21) Anmeldenummer: 19765759.6
(22) Anmeldetag: 13.09.2019
(51) Int. Cl.: A01K 9/00

(54) **SYSTEM ZUR FÜTTERUNG VON NUTZTIEREN MIT EINER VOLLMILCHHALTIGEN TRÄNKE**
SYSTEM FOR FEEDING LIVESTOCK WITH DRINKER CONTAINING WHOLE MILK
SYSTÈME D'ALIMENTATION D'ANIMAUX D'ÉLEVAGE DOTÉ D'UN ABREUVOIR CONTENANT DU LAIT ENTIER

(30) Priorität: 13.09.2018 EP 18194285
(43) Veröffentlichungstag der Anmeldung: 21.07.2021
(73) Patentinhaber: Holm, Hans Joachim, 24784 Westerrönfeld (DE); Laue, Hans-Joachim, 24783 Osterrönfeld (DE)
(72) Erfinder: Holm, Hans Joachim, 24784 Westerrönfeld (DE); Laue, Hans-Joachim, 24783 Osterrönfeld (DE)
(74) Vertreter: Hauck Patentanwaltspartnerschaft mbB
(86) Internationale Anmeldenummer: PCT/EP2019/074530
(87) Internationale Veröffentlichungsnummer: WO 2020/053411

(56) Entgegenhaltungen:
- WO-A1-2004/089096
- DE-B3- 102011 009 076
- US-A- 4 803 955
- US-A1- 2017 223 925
- US-B1- 6 360 691

## Beschreibung

Die Erfindung betrifft ein System zur Fütterung von Nutztieren mit einer vollmilchhaltigen Tränke. Zur Fütterung von Nutztieren, beispielsweise von Kälbern, Lämmern oder Ferkeln, werden Tränkeautomaten eingesetzt, die Tränkerationen einer temperierten Tränke zubereiten. Die Tränke kann aus Milchaustauschpulver (MAT) und Wasser angemischt werden. Ebenfalls möglich ist eine Fütterung mit Vollmilch oder einem Gemisch aus Vollmilch, Milchaustauschpulver und Wasser. Bei der Verwendung von vollmilchhaltiger Tränke spielt die Hygiene eine besonders große Rolle. Wird zur Bereitstellung der Vollmilch ein Vorratstank verwendet, muss dieser regelmäßig gereinigt werden. Dies gilt ebenso für alle anderen Elemente, die mit der Vollmilch in Berührung kommen, beispielsweise Leitungen und Ventile des Tränkeautomaten sowie Leitungen, die von dem Tränkeautomaten zu einer Abrufstation und/oder einem Saugnuckel führen.

Um die erforderlichen Reinigungsmaßnahmen zu vereinfachen, sind Tränkeautomaten bekannt geworden, die eine automatische Reinigung ausführen können. Hierzu werden die Elemente des Tränkeautomaten gegebenenfalls unter Zusatz von Reinigungsmittel gespült. Während einer solchen Reinigungsphase kann der Tränkeautomat keine Tränke zur Verfügung stellen und der Saugnuckel muss zum Beispiel durch Schließen eines Ventils von dem Tränkeautomaten getrennt werden.

Ein solcher Tränkeautomat ist aus der Druckschrift DE 10 2011 009 076 B3 bekannt geworden. Er weist zusätzlich einen Vollmilchtank auf und entspricht den Merkmalen des Oberbegriffs des Anspruchs 1.

Aus dem US-Patent Nr. 4,803,955 ist ein Fütterungssystem bekannt geworden, das einen einzigen, erhöht angeordneten Vollmilchtank aufweist. Von dem Vollmilchtank läuft die Milch durch einen Wärmetauscher in einen unterhalb angeordneten Tränkerationsbehälter. Zur Reinigung kann ein Reinigungsmittel in eine Wasserleitung injiziert werden, die zu einer in dem Vollmilchtank angeordneten Sprühdüse führt.

Davon ausgehend ist es die Aufgabe der Erfindung, ein System zur Fütterung von Nutztieren mit einer vollmilchhaltigen Tränke zur Verfügung zu stellen, das einfacher gereinigt werden kann und das eine hohe Verfügbarkeit aufweist.

Diese Aufgabe wird gelöst durch das System mit den Merkmalen des Anspruchs 1. Vorteilhafte Ausgestaltungen sind in den Unteransprüchen angegeben. Das System dient zur Fütterung von Nutztieren mit einer vollmilchhaltigen Tränke und weist die folgenden Merkmale auf:
- ein Vollmilchdepot, das einen Vollmilchtank zur Aufnahme eines Vollmilchvorrats und eine Entnahmeleitung aufweist,
- eine Zubereitungseinheit zur Zubereitung einer Tränkeration, die eine Vollmilchzuführleitung, einen Tränkerationsbehälter und eine Abgabeleitung aufweist,
- eine Verbindungsleitung, die die Entnahmeleitung mit der Vollmilchzuführleitung verbindet,
- einen Saugnuckel, der mit der Abgabeleitung verbunden ist,
- eine Reinigungseinheit, die mindestens einen Reinigungsmittelbehälter zur Aufnahme eines Reinigungsmittels und eine Reinigungsmittelzuführeinrichtung aufweist, und
- eine Steuerung, die dazu ausgebildet ist, die Reinigungseinheit und die Zubereitungseinheit zur Ausführung eines Reinigungsvorgangs anzusteuern, wobei
- das Vollmilchdepot zwei Vollmilchtanks aufweist, wobei die Entnahmeleitung zwei Entnahmeleitungsabschnitte aufweist, die jeweils ein Ablassventil aufweisen und mit einem der beiden Vollmilchtanks verbunden sind,
- mit der Reinigungsmittelzuführeinrichtung den beiden Vollmilchtanks Reinigungsmittel aus dem mindestens einen Reinigungsmittelbehälter zugeführt werden kann,
- die Steuerung dazu ausgebildet ist, die Reinigungseinheit, die Zubereitungseinheit und die Ablassventile zur Ausführung eines Reinigungsvorgangs derart anzusteuern, dass eine Reinigungsflüssigkeit aus einem der beiden Vollmilchtanks durch die Verbindungsleitung in die Zubereitungseinheit geleitet wird, und wobei
- die Steuerung dazu ausgebildet ist, nach Maßgabe eines Zeitplans automatisch einen Reinigungsvorgang durchzuführen und unter Berücksichtigung eines prognostizierten Bedarfs für einen der beiden Vollmilchtanks, der zu einem ersten Reinigungszeitpunkt leer ist, (i) eine Befüllmenge so vorzugeben, dass sie bis zu einem auf den ersten Reinigungszeitpunkt folgenden, zweiten Reinigungszeitpunkt ausreicht und/oder (ii) einen Befüllzeitpunkt so vorzugeben, dass bei Befüllung des einen der beiden Vollmilchtanks spätestens zu dem Befüllzeitpunkt ein Vollmilchvorrat in dem einen der beiden Vollmilchtanks zur Verfügung steht, bevor der andere der beiden Vollmilchtanks leer ist.

Das Vollmilchdepot dient zur Aufbewahrung und Bereitstellung eines Vollmilchvorrats. Es weist hierzu einen Vollmilchtank mit einem Fassungsvermögen von beispielsweise mindestens 50 1, mindestens 100 1 oder 150 1 oder mehr auf. Über die Entnahmeleitung kann die Vollmilch aus dem Vollmilchtank entnommen werden. Der Vollmilchtank kann einen verschließbaren Deckel aufweisen, sodass er nach dem Entfernen des Deckels einfach befüllt werden kann.

Die Funktion der Zubereitungseinheit kann im Wesentlichen derjenigen eines Tränkeautomaten entsprechen. Sie bereitet jeweils eine Tränkeration zu, die einem Nutztier über den Saugnuckel zur Verfügung gestellt wird. Wie im Zusammenhang mit Tränkeautomaten bekannt, kann die Tränkeration individuell für ein bestimmtes Nutztiere zubereitet werden, zum Beispiel nach Identifizierung des Tiers mit einer Identifizierungseinrichtung. Möglich ist auch eine Zubereitung von Tränkerationen, die jeweils für mehrere Nutztiere bestimmt sind. Die Zubereitungseinheit kann einen Vorratsbehälter für Milchaustauschpulver und einen Wasseranschluss aufweisen, so dass in dem Tränkerationsbehälter vollmilchhaltige Tränken angemischt werden können, die zusätzlich Milchaustauschpulver und Wasser enthalten, oder dass eine vollmilchfreie Fütterung mit Milchaustauschpulver und Wasser möglich ist. Die Zubereitungseinheit kann eine mit dem Wasseranschluss verbundene Wasserleitung mit einem Absperrventil aufweisen, die in die Vollmilchzuführleitung mündet. Dann können gegebenenfalls Wasser und Vollmilch über dieselbe Leitung in den Tränkerationsbehälter eingefüllt werden.

Die Bereitstellung der Tränkeration erfolgt über die Abgabeleitung. Die in der Tränkeration verarbeitete Vollmilchkomponente wird der Zubereitungseinheit über die Vollmilchzuführleitung zugeführt. Die Vollmilchzuführleitung ist über eine Verbindungsleitung mit der Entnahmeleitung des Vollmilchdepots verbunden. Diese Verbindung kann je nach Ausgestaltung des Systems unterschiedlich ausgeführt sein. Beispielsweise können das Vollmilchdepot und die Zubereitungseinheit jeweils in einem eigenen Gehäuse angeordnet sein. In diesem Fall können freie Enden der Entnahmeleitung und der Vollmilchzuführleitung Kupplungen oder sonstige Verbindungseinrichtungen aufweisen, beispielsweise angeordnet und/oder befestigt an dem jeweiligen Gehäuse. Die Verbindungsleitung ist dann eine separate Leitung, deren Enden mit den jeweiligen Verbindungseinrichtungen verbunden werden. Es ist jedoch ebenso möglich, dass die Verbindungsleitung an einem ihrer Enden oder an ihren beiden Enden nahtlos in die Entnahmeleitung bzw. die Vollmilchzuführleitung übergeht. Diese Lösung bietet sich insbesondere an, wenn Vollmilchdepot und Zubereitungseinheit in einem gemeinsamen Gehäuse untergebracht sind.

Der Saugnuckel kann insbesondere in einer Abrufstation oder in einem Abrufstand angeordnet sein. Ebenfalls möglich ist eine Verbindung der Abgabeleitung mit mehreren Saugnuckeln und/oder Abrufstationen.

Das erfindungsgemäße System umfasst eine Reinigungseinheit, die insbesondere dem Vollmilchdepot zugeordnet und/oder in einem Gehäuse des Vollmilchdepots angeordnet sein kann. Sie weist mindestens einen Reinigungsmittelbehälter und eine Reinigungsmittelzuführeinrichtung auf, mit der dem Vollmilchtank Reinigungsmittel zugeführt werden kann. Mithilfe des Reinigungsmittels kann dadurch der Vollmilchtank gereinigt werden.

Bei der Erfindung gibt es außerdem eine Steuerung, mit der die Reinigungseinheit und die Zubereitungseinheit zur Ausführung eines Reinigungsvorgangs angesteuert werden, sodass eine Reinigungsflüssigkeit aus dem Vollmilchtank durch die Verbindungsleitung in die Zubereitungseinheit geleitet wird. Welche Elemente von Reinigungseinheit und Zubereitungseinheit dazu im Einzelnen von der Steuerung angesteuert werden, hängt von der Ausgestaltung der genannten Einheiten ab. Insbesondere ist vorgesehen, dass die Steuerung die Reinigungsmittelzuführeinrichtung der Reinigungseinheit ansteuert, insbesondere so, dass eine definierte Menge von Reinigungsmittel in den Vollmilchtank eingegeben wird. Innerhalb der Zubereitungseinheit können insbesondere ein Ventil und/oder eine Fördereinrichtung angesteuert werden, die außerhalb des Reinigungsvorgangs, also wenn eine Tränkeration zubereitet werden soll, eine Vollmilchzufuhr aus der Vollmilchzuführleitung in den Tränkerationsbehälter ermöglichen. Der Tränkerationsbehälter kann auch als Anmischbehälter bezeichnet werden.

In der Entnahmeleitung ist ein Ablassventil angeordnet. Dieses wird ebenfalls von der Steuerung angesteuert, um den beschriebenen Reinigungsvorgang auszuführen. In diesem Fall steuert die Steuerung also auch Elemente des Vollmilchdepots an.

Die Erfindung weist gegenüber der aus dem Stand der Technik bekannten, auf einen Tränkeautomaten beschränkten automatischen Reinigung mehrere wichtige Vorteile auf. Erstens können sämtliche "stromaufwärts" der Abgabeleitung mit der Vollmilch in Berührung kommende Elemente automatisch gereinigt werden, einschließlich des Vollmilchtanks, der Entnahmeleitung, der Verbindungsleitung und der Vollmilchzuführleitung. Eine zusätzliche manuelle Reinigung dieser Elemente ist daher nicht erforderlich, was eine wesentliche Vereinfachung des Reinigungsvorgangs darstellt.

Zweitens werden durch den einheitlichen Reinigungsvorgang unvermeidliche, reinigungsbedingte Ausfallzeiten auf ein Minimum reduziert. Insbesondere kommt es nicht zu zusätzlichen Ausfallzeiten während einer gesonderten Reinigung des Vollmilchdepots und/oder der Verbindungsleitung. Es ist auch nicht erforderlich, diese Elemente für eine manuelle Reinigung voneinander zu trennen und nachfolgend wieder zu verbinden. Dadurch wird eine höhere Verfügbarkeit des Systems erzielt.

Drittens wird ein besonders sparsamer und umweltfreundlicher Reinigungsmitteleinsatz erreicht, weil die mit dem Reinigungsmittel bereits im Vollmilchtank hergestellte Reinigungsflüssigkeit nach der Reinigung des Vollmilchtanks nicht verworfen, sondern für die Reinigung der Verbindungsleitung und der Zubereitungseinheit weiterverwendet wird.

In einer Ausgestaltung ist der Saugnuckel über eine Saugleitung mit der Abgabeleitung verbunden, wobei von der Saugleitung an einem Abzweigpunkt eine Abzweigleitung abzweigt, in der eine Pumpe angeordnet ist, wobei die Steuerung dazu ausgebildet ist, die Zubereitungseinheit und die Pumpe so anzusteuern, dass die Reinigungsflüssigkeit bei dem Reinigungsvorgang von der Vollmilchzuführleitung durch den Tränkerationsbehälter, durch die Abgabeleitung, durch die Saugleitung bis zum Abzweigpunkt und dann durch die Abzweigleitung geleitet wird. Die Abzweigleitung kann ein offenes Ende aufweisen, das beispielsweise oberhalb eines Abflusses angeordnet sein kann. Der Abzweigpunkt kann nahe an dem Saugnuckel angeordnet sein, sodass die Saugleitung vollständig oder fast vollständig von der automatisierten Reinigung erfasst wird.

In einer Ausgestaltung ist in der Entnahmeleitung ein Füllstandsensor und/oder ein Leermelder angeordnet. Der Füllstandsensor bzw. der Leermelder ist mit der Steuerung verbunden, sodass die Steuerung dafür Sorge tragen kann, dass der Reinigungsvorgang nur bei leerem Vollmilchtank ausgeführt wird. Mithilfe der Füllstandsüberwachung kann außerdem die Menge an Reinigungsflüssigkeit in dem Vollmilchtank während eines Reinigungsvorgangs überwacht und/oder gesteuert werden.

In einer Ausgestaltung weist die Reinigungseinheit einen Wasseranschluss und eine Reinigungsleitung auf, die von dem Wasseranschluss bis zu dem Vollmilchtank führt, wobei die Reinigungsmittelzuführeinrichtung eine Pumpe aufweist, mit der Reinigungsmittel aus dem Reinigungsmittelbehälter in den Vollmilchtank und/oder in die Reinigungsleitung gepumpt werden kann. Die Pumpe ist mit der Steuerung verbunden und wird von der Steuerung angesteuert, um eine gewünschte Reinigungsmittelmenge in den Vollmilchtank einzugeben. Außerdem kann dem Wasseranschluss ein ebenfalls mit der Steuerung verbundenes Ventil zugeordnet sein, sodass die Steuerung auch die Wasserzufuhr in den Vollmilchtank steuern kann.

In einer Ausgestaltung ist die Reinigungsleitung mit einer Sprühdüse verbunden, die in dem Vollmilchtank angeordnet ist. Dadurch können Boden, Wände und/oder Deckel des Vollmilchtanks mit der Reinigungsflüssigkeit besprüht werden, um eine gründliche und dennoch mit geringem Wasser- und Reinigungsmittelverbrauch einhergehende Reinigung zu ermöglichen. Es versteht sich, dass gegebenenfalls mehrere solcher Sprühdüsen mit der Reinigungsleitung verbunden sein können.

In einer Ausgestaltung ist eine erste Zirkulationsleitung vorhanden, die von der Entnahmeleitung zum Vollmilchtank führt und in der eine Zirkulationspumpe angeordnet ist, sodass Reinigungsflüssigkeit in den Vollmilchtank zurückgeführt werden kann. Die Zirkulationspumpe kann ebenfalls mit der Steuerung verbunden sein und von dieser gesteuert werden. Dann kann bei dem geschilderten Reinigungsvorgang ein wiederholtes Durchspülen des Vollmilchtanks und der Entnahmeleitung ausgeführt werden. Ebenfalls möglich ist, dass eine zweite Zirkulationsleitung vorhanden ist, über die Reinigungsflüssigkeit von dem Tränkerationsbehälter in die Vollmilchzuführleitung zurückgeführt werden kann. In der zweiten Zirkulationsleitung kann ein Ventil und/oder eine zweite Zirkulationspumpe angeordnet sein, wobei Ventil und/oder zweite Zirkulationspumpe ebenfalls mit der Steuerung verbunden sein und von dieser gesteuert werden können. Der Reinigungsvorgang kann dann automatisch so ausgeführt werden, dass auch die Zubereitungseinheit wahlweise mehrfach durchspült wird.

In einer Ausgestaltung weist das Vollmilchdepot eine Heiz- und/oder Kühleinrichtung, eine thermische Isolation und/oder ein Rührwerk auf. Beispielsweise kann der Vollmilchtank eine Wandung mit einer thermischen Isolationsschicht aufweisen. Die Heiz- und/oder Kühleinrichtung kann eine elektrische Heizung in einer Wandung des Vollmilchtanks oder in einem Aufnahmeraum des Vollmilchtanks aufweisen und/oder eine Heiz- und/oder Kühlschlange, durch die eine heiße oder kalte Flüssigkeit geleitet werden kann. Auch diese Heiz- und/oder Kühlschlange kann in einer Wandung des Vollmilchtanks oder in einem Aufnahmeraum davon angeordnet sein.

Durch die genannten Maßnahmen ist eine Aufbewahrung der Vollmilch in dem Vollmilchdepot unter optimalen Bedingungen möglich. Insbesondere gelingt es, durch ausreichende Kühlung die Keimzahl der Vollmilch gering zu halten. Dem Vollmilchtank kann ein Temperatursensor zugeordnet sein, der eine Temperatur der in dem Vollmilchtank befindlichen Vollmilch erfasst und der mit der Steuerung verbunden ist. Die Heiz- und/Kühleinrichtung und/oder das Rührwerk können mit der Steuerung verbunden sein und von der Steuerung gesteuert werden. Dadurch kann die Steuerung einerseits die gewünschten Aufbewahrungsbedingungen für die Vollmilch herstellen, indem die Vollmilch durchmischt und/oder gekühlt wird, andererseits einen Reinigungsvorgang unterstützen, indem das Rührwerk während einer Spülung des Vollmilchtanks aktiviert wird.

In einer Ausgestaltung ist die Heizeinrichtung des Vollmilchdepots dazu ausgebildet, in dem Vollmilchtank befindliche Vollmilch auf eine Pasteurisierungstemperatur zu erhitzen und für eine vorgegebene Zeit auf der Pasteurisierungstemperatur zu halten. Weiter kann die Kühleinrichtung des Vollmilchdepots dazu ausgebildet sein, die Vollmilch nach der vorgegebenen Zeit auf die zur Lagerung erforderliche Temperatur abzukühlen. Auch für die Pasteurisierung kann die Steuerung mit der Heizeinrichtung und/oder mit der Kühleinrichtung verbunden sein und diese in geeigneter Weise ansteuern. In Verbindung mit einem Temperatursensor kann die Steuerung dann auf Grundlage der erfassten Temperatur den gewünschten Temperaturverlauf durch Ansteuern der Heizeinrichtung bzw. der Kühleinrichtung steuern. Auf eine gesonderte Pasteurisierung der Vollmilch vor dem Einfüllen in den Vollmilchtank kann dann verzichtet werden, wodurch sich die Vollmilchfütterung weiter vereinfacht.

Bei der Erfindung weist das Vollmilchdepot zwei Vollmilchtanks auf, wobei die Entnahmeleitung zwei Entnahmeleitungsabschnitte aufweist, die jeweils ein Ablassventil aufweisen und mit einem der beiden Vollmilchtanks verbunden sind. Einbezogen sind Drei-Wege-Ventile, die wahlweise einen der beiden Entnahmeleitungsabschnitte mit einem weiterführenden Abschnitt der Entnahmeleitung verbinden. Sämtliche vorstehend zu dem Vollmilchtank beschriebenen Merkmale können bei jedem der beiden Vollmilchtanks verwirklicht werden, beispielsweise kann jeder der beiden Vollmilchtanks ein Rührwerk, eine Heiz- und/oder Kühleinrichtung, eine thermische Isolation und/oder einen verschließbaren Deckel aufweisen, usw. Durch die Verwendung zweier Vollmilchtanks kann das Vollmilchdepot kontinuierlich Vollmilch zur Verfügung stellen. Insbesondere kann nach einem Reinigungsvorgang, der einen der beiden Vollmilchtanks einbezieht, sofort Vollmilch aus dem anderen Vollmilchtank bereitgestellt werden, noch bevor der gerade gereinigte Vollmilchtank erneut befüllt wurde. Dadurch wird die Verfügbarkeit des Systems weiter erhöht und ein Benutzer gewinnt erhebliche Flexibilität hinsichtlich des Befüllzeitpunkts. Weiterhin wird während einer automatischen Reinigung mindestens einer der beiden Vollmilchtanks sowie der diesem Vollmilchtank zugeordnete Entnahmeleitungsabschnitt sowie die Verbindungsleitung gereinigt. Eine zusätzliche manuelle Reinigung ist daher auch bei Verwendung zweier Vollmilchtanks nicht erforderlich. Die beiden Entnahmeleitungsabschnitte weisen jeweils ein Ablassventil auf, über das die Zufuhr von Vollmilch aus dem jeweiligen Vollmilchtank bzw. von darin befindlicher Reinigungsflüssigkeit über die Verbindungsleitung zur Zubereitungseinheit gesteuert werden kann. Die beiden Ablassventile können ebenfalls mit der Steuerung verbunden sein und von dieser gesteuert werden. Die beiden Entnahmeleitungsabschnitte können in einem Verzweigungspunkt zusammengeführt sein und dort unmittelbar in die Verbindungsleitung oder in einen gemeinsamen (dritten) Entnahmeleitungsabschnitt münden. Wahlweise kann jedem der beiden Entnahmeleitungsabschnitte ein Füllstandsensor und/oder ein Leermelder zugeordnet sein, wie vorstehend zu der Entnahmeleitung beschrieben. Die obigen Ausführungen zur Reinigungsmittel- und Wasserzufuhr in den Vollmilchtank gelten entsprechend für jeden der beiden Vollmilchtanks.

Bei der Erfindung ist die Steuerung dazu ausgebildet, nach Maßgabe eines Zeitplans automatisch einen Reinigungsvorgang durchzuführen und unter Berücksichtigung eines prognostizierten Bedarfs eine Befüllmenge für einen zu einem ersten Reinigungszeitpunkt leeren Vollmilchtank so vorzugeben, dass sie bis zu einem auf den ersten Reinigungszeitpunkt folgenden, zweiten Reinigungszeitpunkt ausreicht. Nach Maßgabe eines Zeitplans bedeutet insbesondere zu vorgegebenen Zeitpunkten, beispielsweise um 6:00 Uhr und um 18:00 Uhr, oder in vorgegebenen Zeitabständen, beispielsweise alle 12 Stunden. Der prognostizierte Bedarf kann zum Beispiel manuell eingegeben oder der Steuerung in sonstiger Weise vorgegeben werden. Insbesondere kann der prognostizierte Bedarf von der Steuerung ermittelt werden, zum Beispiel auf Grundlage der von der Zubereitungseinheit in einem vorherigen Zeitraum zubereiteten Tränkemenge. Hierzu kann insbesondere die Tränkemenge in einem dem Prognosezeitraum entsprechenden Zeitraum des Vortags/der Vortage herangezogen werden. Durch das Vorgeben einer Befüllmenge für einen zukünftigen Zeitraum unter Berücksichtigung einer solchen Bedarfsprognose kann sichergestellt werden, dass der Vorrat an Vollmilch, der nachfolgend von einer Bedienperson entsprechend der Befüllmenge in einen vormals leeren Vollmilchtank eingefüllt wird, den Bedarf in dem zukünftigen Zeitraum deckt. Zusätzlich zu dem prognostizierten Bedarf kann bei der Vorgabe der Befüllmenge ein Füllstand in dem jeweils anderen Vollmilchtank berücksichtigt werden. Insgesamt wird erreicht, dass nach dem Einfüllen einer vorgegebenen Befüllmenge eine unterbrechungsfreie Versorgung der Nutztiere bis zum nächsten Reinigungsvorgang möglich ist.

Bei der Erfindung ist es alternativ oder zusätzlich zu der vorstehend beschriebenen Vorgabe einer Befüllmenge möglich, dass die Steuerung dazu ausgebildet ist, nach Maßgabe eines Zeitplans automatisch einen Reinigungsvorgang durchzuführen und unter Berücksichtigung eines prognostizierten Bedarfs für einen der beiden Vollmilchtanks, der zu einem ersten Reinigungszeitpunkt leer ist, einen Befüllzeitpunkt so vorzugeben, dass bei Befüllung des einen der beiden Vollmilchtanks spätestens zu dem Befüllzeitpunkt ein Vollmilchvorrat in dem einen der beiden Vollmilchtanks zur Verfügung steht, bevor der andere der beiden Vollmilchtanks leer ist. Der vorgegebene Befüllzeitpunkt kann beispielsweise einem Benutzer auf einem Display angezeigt werden. Durch die Vorgabe eines spätesten Befüllzeitpunkts wird es in der Praxis erleichtert, eine kontinuierliche Verfügbarkeit von Vollmilch zu erreichen. Zugleich wird eine unnötig frühe Befüllung vermieden, wodurch einer Verkeimung entgegengewirkt wird.

In einer Ausgestaltung ist die Steuerung dazu ausgebildet, bei der Vorgabe des Befüllzeitpunkts die für eine Pasteurisierung der Vollmilch erforderliche Zeit zu berücksichtigen, wobei die Pasteurisierung entweder in dem einen der beiden Vollmilchtanks oder in einer externen Pasteurisierungseinrichtung erfolgen kann. Die erforderliche Zeit kann auf Grundlage von Daten über frühere Pasteurisierungsvorgänge ermittelt werden, oder sie kann rechnerisch ermittelt werden, insbesondere unter Berücksichtigung der vorgegebenen Befüllmenge. Ist eine Pasteurisierung in dem Vollmilchtank vorgesehen, kann diese von der Steuerung zu dem berechneten Befüllzeitpunkt gestartet werden. Ist für die Pasteurisierung eine externe Pasteurisierungseinrichtung vorgesehen, zum Beispiel ein Durchlaufpasteurisierer, kann dieser über eine Kommunikationsschnittstelle mit der Steuerung verbunden sein, und die Steuerung kann die Durchlaufpasteurisierung zu dem berechneten Befüllzeitpunkt starten. In jedem Fall wird es erheblich vereinfacht, den pasteurisierten Vollmilchvorrat rechtzeitig bereitzustellen, und eine unnötig frühe Pasteurisierung, die eine höhere Keimbelastung zur Folge haben kann, wird vermieden.

In einer Ausgestaltung geht die Reinigungsleitung an einem Verzweigungspunkt in zwei Reinigungsleitungsabschnitte über, die jeweils ein Absperrventil aufweisen und zu einem der Vollmilchtanks führen. Die beiden Absperrventile sind jeweils mit der Steuerung verbunden und werden von dieser angesteuert, sodass bei einem Reinigungsvorgang von der Steuerung gesteuert werden kann, in welchen der beiden Vollmilchtanks das Reinigungsmittel eingegeben wird. Einbezogen ist auch hier ein Drei-Wege-Ventil.

In einer Ausgestaltung ist in der Vollmilchzuführleitung eine Vollmilchpumpe angeordnet und/oder eine Heizeinrichtung, mit der eine durch die Vollmilchzuführleitung zugeführte Flüssigkeit vor dem Befüllen des Tränkerationsbehälters temperiert werden kann. Die Heizeinrichtung kann insbesondere ein Boiler sein. Durch diese Lösung wird die Vollmilch erst unmittelbar vor dem Bereitstellen im Tränkerationsbehälter auf die gewünschte Trinktemperatur gebracht. Ein weiterer Vorteil ist, dass Vollmilchpumpe und Heizeinrichtung von dem automatischen Reinigungsvorgang erfasst werden.

In einer Ausgestaltung weist die Steuerung eine Benachrichtigungseinheit auf, die dazu ausgebildet ist, mithilfe einer Anzeige und/oder durch Versenden einer elektronischen Nachricht einen Benutzer über einen Zustand des Systems zu informieren. Der Zustand kann beispielsweise eine oder mehrere der folgenden Informationen umfassen: einen Füllstand in einem Vollmilchtank, einen Füllstand in einem Reinigungsmittelbehälter, eine Temperatur oder einen Temperaturverlauf in einem Vollmilchtank, eine Abweichung eines Messwerts von einem Sollwert, dass und/oder wann ein Reinigungsvorgang ausgeführt wird, dass und/oder wann eine Pasteurisierung durchgeführt wird, oder eine von der Steuerung ermittelte Befüllmenge. Diese Informationen können entweder mit einer Anzeige an dem System dargestellt oder als elektronische Nachricht an den Benutzer versendet werden, insbesondere per E-Mail, SMS oder über ein soziales Netzwerk. Durch diese Informationen wird für den Benutzer die Fütterung weiter vereinfacht.

In einer Ausgestaltung weist die Steuerung eine Dokumentationseinheit auf, die dazu ausgebildet ist, einen Reinigungsvorgang zu dokumentieren. Alternativ oder zusätzlich kann die Dokumentationseinheit dazu ausgebildet sein, einen Pasteurisierungsvorgang zu dokumentieren. Mit Hilfe der Dokumentationseinheit kann jederzeit verifiziert werden, dass das System ordnungsgemäß gereinigt bzw. dass die verfütterte Vollmilch ordnungsgemäß pasteurisiert wurde. Hierzu können die jeweils relevanten Informationen von der Steuerung gespeichert und/oder für eine spätere Auswertung zur Verfügung gestellt werden.

In einer Ausgestaltung weist die Reinigungsmittelzuführeinrichtung eine gesonderte Reinigungsmittelleitung auf, über die der Zubereitungseinheit unter Umgehung des Vollmilchdepots Reinigungsmittel aus dem mindestens einen Reinigungsmittelbehälter zugeführt werden kann, und die Steuerung ist dazu ausgebildet, automatisch nach einem vorgegebenen Zeitplan eine Reinigung der Zubereitungseinheit durchzuführen, in die das Vollmilchdepot nicht einbezogen ist. Die Reinigung der Zubereitungseinheit kann wahlweise sämtliche Leitungsabschnitte von der Zubereitungseinheit bis zum Saugnuckel einbeziehen. Die gesonderte Reinigungsmittelleitung kann zum Beispiel in den Tränkerationsbehälter münden oder in eine zum Tränkerationsbehälter führende Wasserleitung. Der Zeitplan kann eine Reinigung der Zubereitungseinheit beispielsweise in festen Zeitabständen vorsehen, z.B. immer 12 Stunden nach einer vorherigen Reinigung. Diese Ausgestaltung berücksichtigt, dass die Zubereitungseinheit in bestimmten Anwendungsfällen häufiger gereinigt werden sollte als die Vollmilchtanks, insbesondere wenn die Vollmilch in den Vollmilchtanks gekühlt gelagert wird, was in der Regel für 24 bis 48 Stunden problemlos möglich ist. Insbesondere können die Vollmilchtanks nach einem Zeitplan und/oder immer dann gereinigt werden, wenn sie leer sind, wobei in diese Reinigung wie vorstehend erläutert die Zubereitungseinheit und gegebenenfalls weitere Komponenten des Systems einbezogen werden. Zusätzliche Reinigungen der Zubereitungseinheit können nach Bedarf erfolgen, ohne dass hierfür der betreffende Vollmilchtank entleert werden muss.

Nachfolgend wird die Erfindung anhand eines Ausführungsbeispiels näher erläutert. Es zeigen:
- Fig. 1: ein System zur Fütterung von Nutztieren mit einer vollmilchhaltigen Tränke in einer schematischen Darstellung, und
- Fig. 2: ein Diagramm zum zeitlichen Verlauf der Füllstände in den beiden Vollmilchtanks des Systems aus Fig. 1

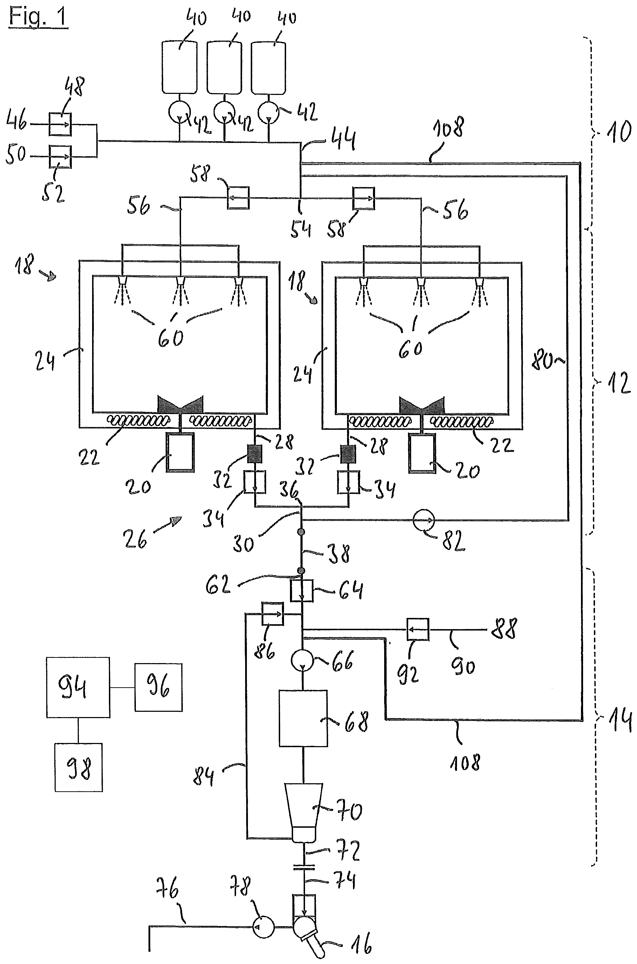

Das System zur Fütterung von Nutztieren mit einer vollmilchhaltigen Tränke aus Figur 1 hat eine Reinigungseinheit 10, ein Vollmilchdepot 12, eine Zubereitungseinheit 14 und einen Saugnuckel 16. Das Vollmilchdepot 12 umfasst zwei Vollmilchtanks 18, die jeweils ein Fassungsvermögen von mindestens 150 1 aufweisen. Jeder der beiden Vollmilchtanks 18 weist ein Rührwerk 20, eine Heiz-/Kühlschlange 22 und eine Wärmeisolation 24 auf.

Eine Entnahmeleitung 26 des Vollmilchdepots 12 umfasst zwei Entnahmeleitungsabschnitte 28, die jeweils mit einem der beiden Vollmilchtanks 18 verbunden sind und in denen jeweils ein Füllstandsensor 32 und ein Ablassventil 34 angeordnet sind. Die von dem jeweiligen Vollmilchtank 18 entfernten Enden der Entnahmeleitungsabschnitte 28 münden an einem Verzweigungspunkt 36 in einen gemeinsamen Entnahmeleitungsabschnitt 30. An dem von dem Verzweigungspunkt 36 entfernten Ende des gemeinsamen Entnahmeleitungsabschnitts 30 ist die Entnahmeleitung 26 mit einer Verbindungsleitung 38 verbunden oder geht in diese über.

In der Figur 1 oberhalb des Vollmilchdepots 12 befindet sich eine Reinigungseinheit 10, die in ein (nicht gezeigtes) Gehäuse des Vollmilchdepots 12 integriert sein kann. Die Reinigungseinheit 10 weist drei Reinigungsmittelbehälter 40 auf, die jeweils ein Reinigungsmittel enthalten. Jedem Reinigungsmittelbehälter 40 ist eine Pumpe 42 zugeordnet, mit der Reinigungsmittel aus dem betreffenden Reinigungsmittelbehälter 40 in eine Reinigungsleitung 44 dosiert werden kann.

Das in der Figur 1 links dargestellte Ende der Reinigungsleitung 44 ist über ein Absperrventil 48 mit einem Kaltwasseranschluss 46 verbunden und über ein Absperrventil 52 mit einer Warmwasserleitung 50. Das andere Ende der Reinigungsleitung 44 führt zu einem Verzweigungspunkt 54, an dem sich die Reinigungsleitung 44 in zwei Reinigungsleitungsabschnitte 56 verzweigt. In jedem dieser Reinigungsleitungsabschnitte 56 ist ein Absperrventil 58 angeordnet. Die freien Enden der Reinigungsabschnitte 56 sind jeweils mit mehreren Sprühdüsen 60 verbunden, die in einem der Vollmilchtanks 18 angeordnet sind. Auf diese Weise kann beispielsweise durch Öffnen des Absperrventils 52 und des Absperrventils 58 bei geschlossenen Absperrventilen 48, 56 Warmwasser in den in der Figur 1 links dargestellten Vollmilchtank 18 eingesprüht werden, gegebenenfalls unter Hinzufügung von Reinigungsmittel aus einem der Reinigungsmittelbehälter 40 durch entsprechendes Ansteuern der zugeordneten Pumpe 42. Anschließend befindet sich die Reinigungsflüssigkeit zunächst in dem betreffenden Vollmilchtank 18.

Mit dem von der Entnahmeleitung 26 entfernten Ende der Verbindungsleitung 38 ist eine Vollmilchzuführleitung 62, in der ein Einlassventil 64 angeordnet ist, verbunden. Weiterhin umfasst die Zubereitungseinheit 14 eine Vollmilchpumpe 66, die mit der Vollmilchzuführleitung 62 verbunden ist und die in der Vollmilchzuführleitung 62 befindliche Flüssigkeit durch eine Heizeinrichtung 68 hindurch in einen Tränkerationsbehälter 70 fördern kann.

An dem Tränkerationsbehälter 70 beginnt eine Abgabeleitung 72 der Zubereitungseinheit 14, die in eine Saugleitung 74 mündet, welche mit dem Saugnuckel 16 verbunden ist. An einem nicht dargestellten Abzweigpunkt in der Saugleitung 74 kurz vor dem Saugnuckel 16 zweigt eine Abzweigleitung 76 ab, in der eine Pumpe 78 angeordnet ist.

Weiterhin zeigt Figur 1 eine erste Zirkulationsleitung 80, in der eine erste Zirkulationspumpe 82 angeordnet ist. Die erste Zirkulationsleitung 80 beginnt an dem gemeinsamen Entnahmeleitungsabschnitt 30 und führt in die Reinigungsleitung 44, kurz vor dem Verzweigungspunkt 54. Ebenfalls dargestellt ist eine zweite Zirkulationsleitung 84, in der ein Absperrventil 86 angeordnet ist und die von dem Tränkerationsbehälter 70 in die Vollmilchzuführleitung 62 zurückführt. Ein Kaltwasseranschluss 88 ist über eine Leitung 90, in der ein Absperrventil 92 angeordnet ist, mit der Vollmilchzuführleitung 62 verbunden ist. Über diese Leitung 90 kann Kaltwasser für das Anmischen einer Tränkeration zugeführt werden.

Eine gesonderte Reinigungsmittelleitung 108 verbindet die Reinigungsleitung 44 mit der Vollmilchzuführleitung 62, an einem Punkt stromabwärts einer Einmündung der Leitung 90, mit der Kaltwasser in die Vollmilchzuführleitung 62 gegeben werden kann.

Schließlich weist das System aus Figur 1 eine Steuerung 94 auf, die über nicht dargestellte Verbindungen mit jedem der genannten Ventile und jeder der genannten Pumpen verbunden ist. Außerdem ist die Steuerung 94 mit den beiden Rührwerken 20, mit der Heizeinrichtung 68 sowie mit den Füllstandsensoren 32 verbunden.

Die Steuerung 94 ist dazu ausgebildet, einen automatischen Reinigungsvorgang auszuführen. Hierzu wird in einem ersten Schritt der in die jeweilige Reinigung einzubeziehende Vollmilchtank 18 wie oben beschrieben mit Reinigungsflüssigkeit gefüllt. Dafür steuert die Steuerung 94 eines oder beide Absperrventile 48, 52 an den Wasseranschlüssen 46, 50 und mindestens eine der Pumpen 42 an. Anschließend wird das diesem Vollmilchtank 18 zugeordnete Ablassventil 34 sowie das Einlassventil 64 von der Steuerung 94 geöffnet und die Vollmilchpumpe 66 von der Steuerung 94 angesteuert, sodass die Reinigungsflüssigkeit aus dem betreffenden Vollmilchtank 18 durch die Entnahmeleitung 26, die Verbindungsleitung 38 und die Vollmilchzuführleitung 62 in den Tränkerationsbehälter 70 geleitet wird. Durch Ansteuern der Pumpe 78 durch die Steuerung 94 wird sodann die Reinigungsflüssigkeit aus dem Tränkerationsbehälter 70 durch die Abgabeleitung 72, durch die Saugleitung 94 bis zum Abzweigpunkt vor dem Saugnuckel 16 und von dort weiter durch die Abzweigleitung 76 geleitet, um auch diese Elemente in die Reinigung einzubeziehen.

Nur schematisch dargestellt sind eine Benachrichtigungseinheit 96 und eine Dokumentationseinheit 98, die die vorstehend beschriebenen Funktionen erfüllen. Sie können in die Steuerung 94 integriert oder, wie in Fig. 1 angedeutet, damit verbunden sein.

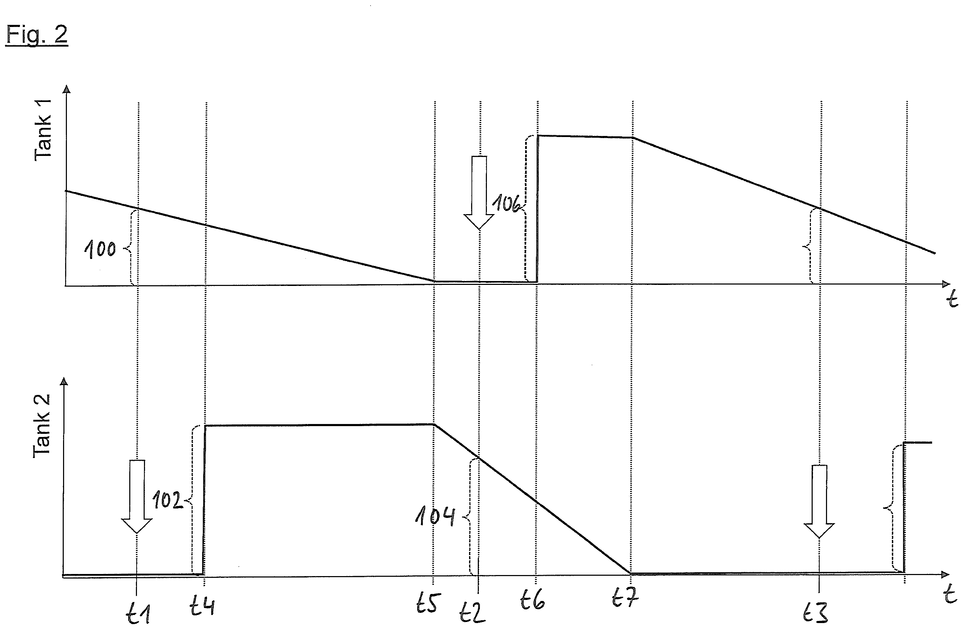

Nachfolgend wird anhand der Figur 2 der zeitliche Ablauf der Verwendung des Systems aus Figur 1 beispielhaft erläutert. Diese Erläuterungen gelten nicht nur für das System aus Figur 1, sondern sind von dessen konstruktiven Einzelheiten unabhängig. Sie gelten gleichermaßen für andere erfindungsgemäße Systeme mit zwei Vollmilchtanks 18. Das obere Diagramm der Figur 1 zeigt den Füllstand des linken Vollmilchtanks 18 aus der Figur 1, nachfolgend auch als Tank 1 bezeichnet, das untere Diagramm den zeitlichen Verlauf des Füllstands des in der Figur 1 rechts dargestellten Vollmilchtanks 18, nachfolgend auch als Tank 2 bezeichnet.

Die Zeitachse verläuft horizontal und umfasst drei Zeitpunkte t1, t2 und t3, zu denen jeweils ein automatischer Reinigungsvorgang, der einen der beiden Vollmilchtanks 18 einbezieht, ausgeführt wird. Diese Reinigungsvorgänge werden durch die drei Pfeile veranschaulicht. Wie das Diagramm zeigt, ist zum Zeitpunkt t1 Tank 2 leer und im Tank 1 befindet sich eine Restmenge 100, die im Beispiel 100 1 betragen soll.

Die Steuerung 94 hat anhand des Verbrauchs des korrespondierenden Vortageszeitraums ermittelt, dass bis zum Reinigungszeitpunkt t2 voraussichtlich ein Bedarf von 250 1 besteht. Diesen prognostizierten Bedarf sowie die Restmenge 100 und einen Sicherheitszuschlag von 50 1 berücksichtigend, gibt die Steuerung 94 zum Zeitpunkt t1 eine Befüllmenge 102 für Tank 2 von 250 1 - 100 1 + 50 1 = 200 1 vor. Zum Zeitpunkt t4, einige Stunden nach dem Zeitpunkt t1, wird diese Befüllmenge 102 von einer Bedienperson in den Tank 2 eingefüllt. Währenddessen erfolgt die Bereitstellung der Vollmilch für die Zubereitungseinheit 14 weiterhin aus dem Tank 1, wie der dargestellte, langsam abnehmende Füllstand darin verdeutlicht. Zum Zeitpunkt t5 ist Tank 1 leer und durch Schließen eines der Ablassventile 34 und Öffnen des anderen Ablassventils 34 wird die Versorgung der Zubereitungseinheit 14 praktisch unterbrechungsfrei auf Tank 2 umgestellt.

Zum Zeitpunkt t2 erfolgt dann gemäß dem vorgegebenen Zeitplan die automatische Reinigung, in die diesmal Tank 1 einbezogen wird. Zur selben Zeit wird festgestellt, dass im Tank 2 eine Restmenge 104 von 1501 vorhanden ist. Anhand eines prognostizierten Bedarfs von 280 1 bis zum Zeitpunkt t3 der nächsten planmäßigen Reinigung und eines Sicherheitszuschlags von 50 1 ermittelt die Steuerung 94 eine Befüllmenge 106 für Tank 1 von 280 1 -150 1 +50 1 = 180 1. Ein Benutzer füllt diese Befüllmenge zum Zeitpunkt t6 in Tank 1 ein. Etwas später, zum Zeitpunkt t7, ist Tank 2 leer und die Versorgung der Zubereitungseinheit 14 wird auf Tank 1 umgestellt. Die geschilderten Vorgänge wiederholen sich zum Zeitpunkt t3 der nächsten Reinigung. Es versteht sich, dass die Berechnung der Befüllmengen nicht notwendigerweise zum Zeitpunkt einer Reinigung ausgeführt werden müssen.

### Liste der Bezugszeichen:

- 10: Reinigungseinheit
- 12: Vollmilchdepot
- 14: Zubereitungseinheit
- 16: Saugnuckel
- 18: Vollmilchtank
- 20: Rührwerk
- 22: Heiz-/Kühlschlange
- 24: Wärmeisolation
- 26: Entnahmeleitung
- 28: Entnahmeleitungsabschnitt
- 30: gemeinsamer Entnahmeleitungsabschnitt
- 32: Füllstandssensor
- 34: Ablassventil
- 36: Verzweigungspunkt
- 38: Verbindungsleitung
- 40: Reinigungsmittelbehälter
- 42: Pumpe
- 44: Reinigungsleitung
- 46: Kaltwasseranschluss
- 48: Absperrventil
- 50: Warmwasseranschluss
- 52: Absperrventil
- 54: Verzweigungspunkt
- 56: Reinigungsleitungsabschnitt
- 58: Absperrventil
- 60: Sprühdüse
- 62: Vollmilchzuführleitung
- 64: Einlassventil
- 66: Vollmilchpumpe
- 68: Heizeinrichtung
- 70: Tränkerationsbehälter
- 72: Abgabeleitung
- 74: Saugleitung
- 76: Abzweigleitung
- 78: Pumpe
- 80: erste Zirkulationsleitung
- 82: Pumpe
- 84: zweite Zirkulationsleitung
- 86: Absperrventil
- 88: Kaltwasseranschluss
- 90: Leitung
- 92: Absperrventil
- 94: Steuerung
- 96: Benachrichtigungseinheit
- 98: Dokumentationseinheit
- 100: Restmenge
- 102: Befüllmenge
- 104: Restmenge
- 106: Befüllmenge
- 108: gesonderte Reinigungsmittelleitung

## Patentansprüche

1. System zur Fütterung von Nutztieren mit einer vollmilchhaltigen Tränke, wobei das System folgendes aufweist:
• ein Vollmilchdepot (12), das einen Vollmilchtank (18) zur Aufnahme eines Vollmilchvorrats und eine Entnahmeleitung (26) aufweist,
• eine Zubereitungseinheit (14) zur Zubereitung einer Tränkeration, die eine Vollmilchzuführleitung (62), einen Tränkerationsbehälter (70) und eine Abgabeleitung (72) aufweist,
• eine Verbindungsleitung (38), die die Entnahmeleitung (26) mit der Vollmilchzuführleitung (62) verbindet,
• einen Saugnuckel (16), der mit der Abgabeleitung (72) verbunden ist,
• eine Reinigungseinheit (10), die mindestens einen Reinigungsmittelbehälter (40) zur Aufnahme eines Reinigungsmittels und eine Reinigungsmittelzuführeinrichtung aufweist, und
• eine Steuerung (94), die dazu ausgebildet ist, die Reinigungseinheit (10) und die Zubereitungseinheit (14) zur Ausführung eines Reinigungsvorgangs anzusteuern, **dadurch gekennzeichnet, dass**
• das Vollmilchdepot (12) zwei Vollmilchtanks (18) aufweist, wobei die Entnahmeleitung (26) zwei Entnahmeleitungsabschnitte (28) aufweist, die jeweils ein Ablassventil (34) aufweisen und mit einem der beiden Vollmilchtanks (18) verbunden sind,
• mit der Reinigungsmittelzuführeinrichtung den beiden Vollmilchtanks (18) Reinigungsmittel aus dem mindestens einen Reinigungsmittelbehälter (40) zugeführt werden kann,
• die Steuerung (94) dazu ausgebildet ist, die Reinigungseinheit (10), die Zubereitungseinheit (14) und die Ablassventile (34) zur Ausführung eines Reinigungsvorgangs derart anzusteuern, dass eine Reinigungsflüssigkeit aus einem der beiden Vollmilchtanks (18) durch die Verbindungsleitung (38) in die Zubereitungseinheit (14) geleitet wird, und wobei
• die Steuerung (94) dazu ausgebildet ist, nach Maßgabe eines Zeitplans automatisch einen Reinigungsvorgang durchzuführen und unter Berücksichtigung eines prognostizierten Bedarfs für einen der beiden Vollmilchtanks (18), der zu einem ersten Reinigungszeitpunkt leer ist, (i) eine Befüllmenge (102, 106) so vorzugeben, dass sie bis zu einem auf den ersten Reinigungszeitpunkt folgenden, zweiten Reinigungszeitpunkt ausreicht und/oder (ii) einen Befüllzeitpunkt (t5) so vorzugeben, dass bei Befüllung des einen der beiden Vollmilchtanks (18) spätestens zu dem Befüllzeitpunkt (t5) ein Vollmilchvorrat in dem einen der beiden Vollmilchtanks zur Verfügung steht, bevor der andere der beiden Vollmilchtanks (18) leer ist.

2. System nach Anspruch 1, **dadurch gekennzeichnet, dass** der Saugnuckel (16) über eine Saugleitung (74) mit der Abgabeleitung (72) verbunden ist, wobei von der Saugleitung (74) an einem Abzweigpunkt eine Abzweigleitung (76) abzweigt, in der eine Pumpe (78) angeordnet ist, wobei die Steuerung (94) dazu ausgebildet ist, die Zubereitungseinheit (14) und die Pumpe (78) so anzusteuern, dass die Reinigungsflüssigkeit bei dem Reinigungsvorgang von der Vollmilchzuführleitung (62) durch den Tränkerationsbehälter (70), durch die Abgabeleitung (72), durch die Saugleitung (74) bis zum Abzweigpunkt und dann durch die Abzweigleitung (76) geleitet wird.

3. System nach Anspruch 1 oder 2, **dadurch gekennzeichnet, dass** in der Entnahmeleitung (26) ein Füllstandssensor (32) und/oder ein Leermelder angeordnet ist.

4. System nach einem der Ansprüche 1 bis 3, **dadurch gekennzeichnet, dass** die Reinigungseinheit (10) einen Wasseranschluss (46, 50) und eine Reinigungsleitung (44) aufweist, die von dem Wasseranschluss (46, 50) bis zu den Vollmilchtanks (18) führt, wobei die Reinigungsmittelzuführeinrichtung eine Pumpe (42) aufweist, mit der Reinigungsmittel aus dem mindestens einen Reinigungsmittelbehälter (40) in die Vollmilchtanks (18) und/oder in die Reinigungsleitung (44) gepumpt werden kann.

5. System nach Anspruch 4, **dadurch gekennzeichnet, dass** die Reinigungsleitung (44) mit Sprühdüsen (60) verbunden ist, die in den Vollmilchtanks (18) angeordnet sind.

6. System nach einem der Ansprüche 1 bis 5, **dadurch gekennzeichnet, dass** eine erste Zirkulationsleitung (80) vorhanden ist, die von der Entnahmeleitung (26) zu den Vollmilchtanks (18) führt und in der eine Zirkulationspumpe (82) angeordnet ist, so dass Reinigungsflüssigkeit in die Vollmilchtanks (18) zurückgeführt werden kann.

7. System nach einem der Ansprüche 1 bis 6, **dadurch gekennzeichnet, dass** das Vollmilchdepot (12) eine Heiz- und/oder Kühleinrichtung, eine thermische Isolation (24) und/oder ein Rührwerk (20) aufweist.

8. System nach Anspruch 7, **dadurch gekennzeichnet, dass** die Heizeinrichtung des Vollmilchdepots (12) dazu ausgebildet ist, jeweils in einem der beiden Vollmilchtanks (18) befindliche Vollmilch auf eine Pasteurisierungstemperatur zu erhitzen und für eine vorgegebene Zeit auf der Pasteurisierungstemperatur zu halten.

9. System nach einem der Ansprüche 1 bis 8, **dadurch gekennzeichnet, dass** die Steuerung (94) dazu ausgebildet ist, bei der Vorgabe des Befüllzeitpunkts (t5) die für eine Pasteurisierung der Vollmilch erforderliche Zeit zu berücksichtigen, wobei die Pasteurisierung entweder in dem einen der beiden Vollmilchtanks oder in einer externen Pasteurisierungseinrichtung erfolgen kann.

10. System nach einem der Ansprüche 1 bis 9, **dadurch gekennzeichnet, dass** die Reinigungsleitung (44) an einem Verzweigungspunkt (54) in zwei Reinigungsleitungsabschnitte (56) übergeht, die jeweils ein Absperrventil (58) aufweisen und zu einem der beiden Vollmilchtanks (18) führen.

11. System nach einem der Ansprüche 1 bis 10, **dadurch gekennzeichnet, dass** in der Vollmilchzuführleitung (62) eine Vollmilchpumpe (66) angeordnet ist und/oder eine Heizeinrichtung (68), mit der eine durch die Vollmilchzuführleitung (62) zugeführte Flüssigkeit vor dem Befüllen des Tränkerationsbehälters (70) temperiert werden kann.

12. System nach einem der Ansprüche 1 bis 11, **dadurch gekennzeichnet, dass** die Steuerung (94) eine Benachrichtigungseinheit (96) aufweist, die dazu ausgebildet ist, mithilfe einer Anzeige und/oder durch Versenden einer elektronischen Nachricht einen Benutzer über einen Zustand des Systems zu informieren.

13. System nach einem der Ansprüche 1 bis 12, **dadurch gekennzeichnet, dass** die Steuerung (94) eine Dokumentationseinheit (98) aufweist, die dazu ausgebildet ist, einen Reinigungsvorgang zu dokumentieren.

14. System nach einem der Ansprüche 1 bis 13, **dadurch gekennzeichnet, dass** die Reinigungsmittelzuführeinrichtung eine gesonderte Reinigungsmittelleitung (108) aufweist, über die der Zubereitungseinheit (14) unter Umgehung des Vollmilchdepots (12) Reinigungsmittel aus dem mindestens einen Reinigungsmittelbehälter (40) zugeführt werden kann, und die Steuerung dazu ausgebildet ist, automatisch nach einem vorgegebenen Zeitplan eine Reinigung der Zubereitungseinheit (14) durchzuführen, in die das Vollmilchdepot (12) nicht einbezogen ist.

## Claims

1. A system for feeding livestock with a liquid feed containing whole milk, wherein the system comprises the following:
• a whole milk store (12) which comprises a whole milk tank (18) for receiving a stock of whole milk and which comprises a withdrawal line (26),
• a preparation unit (14) for preparing a liquid feed portion which comprises a whole milk supply line (62), a liquid feed portion container (70), and a dispensing line (72),
• a connection line (38) which connects the withdrawal line (26) to the whole milk supply line (62),
• a suction teat (16) which is connected to the dispensing line (72),
• a cleaning unit (10) which comprises at least one cleaning agent container (40) for receiving a cleaning agent and which comprises a cleaning agent supply apparatus, and
• a controller (94) which is designed to actuate the cleaning unit (10) and the preparation unit (14) to perform a cleaning process, **characterized in that**
• the whole milk store (12) comprises two whole milk tanks (18), wherein the withdrawal line (26) comprises two withdrawal line sections (28) which in each case comprise a discharge valve (34) and are connected to one of the two whole milk tanks (18),
• cleaning agent can be supplied from the at least one cleaning agent container (40) to the two whole milk tanks (18) by means of the cleaning agent supply apparatus,
• the controller (94) is designed to actuate the cleaning unit (10), the preparation unit (14), and the discharge valves (34) to perform a cleaning process such that a cleaning liquid is conducted from one of the two whole milk tanks (18) through the connection line (38) and into the preparation unit (14), and wherein
• the controller (94) is designed to automatically carry out a cleaning process according to a schedule and (i) to specify a filling quantity (102, 106) in consideration of a predicted demand for one of the two whole milk tanks (18) that is empty at a first cleaning time, such that said filling quantity is sufficient until a second cleaning time that follows on from the first cleaning time, and/or (ii) to specify a filling time (t5), such that a whole milk store in one of the two whole milk tanks is available at the latest at the filling time (t5) when said one of two whole milk tanks (18) is filled and before the other of the two whole milk tanks (18) is empty.

2. The system according to claim 1, **characterized in that** the suction teat (16) is connected to the dispensing line (72) via a suction line (74), wherein a branch-off line (76) in which a pump (78) is arranged branches off from the suction line (74) at a branch-off point, wherein the controller (94) is designed to actuate the preparation unit (14) and the pump (78) such that, during the cleaning process, the cleaning liquid is conducted from the whole milk supply line (62) through the liquid feed portion container (70), through the dispensing line (72), through the suction line (74) to the branch-off point, and then through the branch-off line (76).

3. The system according to claim 1 or 2, **characterized in that** a fill level sensor (32) and/or an empty detector is arranged in the withdrawal line (26).

4. The system according to any one of claims 1 to 3, **characterized in that** the cleaning unit (10) comprises a water connection (46, 50) and a cleaning line (44) which leads from the water connection (46, 50) to the whole milk tanks (18), wherein the cleaning agent supply apparatus comprises a pump (42) by means of which cleaning agent can be pumped out of the at least one cleaning agent container (40) and into the whole milk tanks (18) and/or into the cleaning line (44).

5. The system according to claim 4, **characterized in that** the cleaning line (44) is connected to spray nozzles (60) which are arranged in the whole milk tanks (18).

6. The system according to any one of claims 1 to 5, **characterized in that** a first circulation line (80) is provided which leads from the withdrawal line (26) to the whole milk tanks (18) and in which a circulation pump (82) is arranged, such that cleaning liquid can be guided back into the whole milk tanks (18).

7. The system according to any one of claims 1 to 6, **characterized in that** the whole milk store (12) comprises a heating and/or cooling apparatus, thermal insulation (24), and/or a stirrer (20).

8. The system according to claim 7, **characterized in that** the heating apparatus of the whole milk store (12) is designed to heat whole milk located in each case in one of the two whole milk tanks (18) to a pasteurization temperature and to keep said whole milk at the pasteurization temperature for a specified period of time.

9. The system according to any one of claims 1 to 8, **characterized in that** the controller (94) is designed to take into account the period of time required for pasteurizing the whole milk when specifying the filling time (t5), wherein the pasteurization can take place either in one of the two whole milk tanks or in an external pasteurization apparatus.

10. The system according to any one of claims 1 to 9, **characterized in that** the cleaning line (44) transitions at a branching point (54) into two cleaning line sections (56) which in each case comprise a shut-off valve (58) and lead to one of the two whole milk tanks (18).

11. The system according to any one of claims 1 to 10, **characterized in that** a whole milk pump (66) and/or a heating apparatus (68) by means of which the temperature of a liquid supplied by means of the whole milk supply line (62) can be controlled before the liquid feed portion container (70) is filled is arranged in the whole milk supply line (62).

12. The system according to any one of claims 1 to 11, **characterized in that** the controller (94) comprises a notification unit (96) which is designed to inform a user of a state of the system with the aid of a display and/or by sending an electronic message.

13. The system according to any one of claims 1 to 12, **characterized in that** the controller (94) comprises a documentation unit (98) which is designed to document a cleaning process.

14. The system according to any one of claims 1 to 13, **characterized in that** the cleaning agent supply apparatus comprises a separate cleaning agent line (108) via which cleaning agent can be supplied to the preparation unit (14) from the at least one cleaning agent container (40) while bypassing the whole milk store (12), and the controller is designed to automatically carry out cleaning of the preparation unit (14) according to a specified schedule, in which cleaning the whole milk store (12) is not involved.

## Revendications

1. Système d'alimentation d'animaux d'élevage doté d'un abreuvoir contenant du lait entier, le système présentant les éléments suivants :
• un dépôt de lait entier (12) présentant un réservoir de lait entier (18) destiné à recevoir une réserve de lait entier et une conduite de prélèvement (26),
• une unité de préparation (14) destinée à la préparation d'une ration d'abreuvoir, laquelle présente une conduite d'amenée de lait entier (62), un récipient de ration d'abreuvoir (70) et une conduite de distribution (72),
• une conduite de liaison (38) reliant la conduite de prélèvement (26) à la conduite d'amenée de lait entier (62),
• une tétine d'aspiration (16) reliée à la conduite de distribution (72),
• une unité de nettoyage (10) présentant au moins un récipient de produit de nettoyage (40) destiné à recevoir un produit de nettoyage et un dispositif d'amenée de produit de nettoyage, et
• une commande (94) conçue pour actionner l'unité de nettoyage (10) et l'unité de préparation (14) pour l'exécution d'une opération de nettoyage, **caractérisé en ce que**
• le dépôt de lait entier (12) présente deux réservoirs de lait entier (18), dans lequel la conduite de prélèvement (26) présente deux sections de conduite de prélèvement (28), lesquelles présentent respectivement une soupape de décharge (34) et sont reliées à l'un des deux réservoirs de lait entier (18),
• du produit de nettoyage peut être amené aux deux réservoirs de lait entier (18) à partir de l'au moins un récipient de produit de nettoyage (40) à l'aide du dispositif d'amenée de produit de nettoyage,
• la commande (94) est conçue pour actionner l'unité de nettoyage (10), l'unité de préparation (14) et les soupapes de décharge (34) pour l'exécution d'une opération de nettoyage, de telle façon qu'un liquide de nettoyage est guidé à partir de l'un des réservoirs de lait entier (18) vers l'unité de préparation (14) à travers la conduite de liaison (38), et dans lequel
• la commande (94) est conçue pour exécuter une opération de nettoyage automatiquement en fonction d'un programme et, compte tenu d'un besoin prévu pour l'un des deux réservoirs de lait entier (18) vide à un premier moment de nettoyage, pour (i) définir une quantité de remplissage (102, 106) de manière à ce que celle-ci soit suffisante jusqu'à un deuxième moment de nettoyage consécutif au premier moment de nettoyage et/ou pour (ii) définir un moment de remplissage (t5) de manière à ce que lors du remplissage de l'un des deux réservoirs de lait entier (18), une réserve de lait entier soit disponible au plus tard au moment de remplissage (t5) dans l'un des deux réservoirs de lait entier, avant que l'autre des deux réservoirs de lait entier (18) ne soit vide.

2. Système selon la revendication 1, **caractérisé en ce que** la tétine d'aspiration (16) est reliée à la conduite de distribution (72) par le biais d'une conduite d'aspiration (74), dans lequel une conduite de dérivation (76) dans laquelle est disposée une pompe (78) dérive de la conduite d'aspiration (74) au niveau d'un point de dérivation, dans lequel la commande (94) est conçue pour actionner l'unité de préparation (14) et la pompe (78) de telle façon que pendant l'opération de nettoyage, le liquide de nettoyage est guidé à partir de la conduite d'amenée de lait entier (62), à travers le récipient de ration d'abreuvoir (70), à travers la conduite de distribution (72), à travers la conduite d'aspiration (74) jusqu'au point de dérivation et ensuite à travers la conduite de dérivation (76).

3. Système selon la revendication 1 ou 2, **caractérisé en ce qu'**un capteur de niveau de remplissage (32) et/ou un avertisseur de vide est/sont disposé(s) dans la conduite de prélèvement (26).

4. Système selon l'une des revendications 1 à 3, **caractérisé en ce que** l'unité de nettoyage (10) présente un raccord d'eau (46, 50) et une conduite de nettoyage (44), laquelle mène du raccord d'eau (46, 50) jusqu'au réservoir de lait entier (18), dans lequel le dispositif d'amenée de produit de nettoyage présente une pompe (42) avec laquelle le produit de nettoyage peut être pompé à partir de l'au moins un récipient de produit de nettoyage (40) vers le réservoir de lait entier (18) et/ou vers la conduite de nettoyage (44).

5. Système selon la revendication 4, **caractérisé en ce que** la conduite de nettoyage (44) est reliée à des buses de pulvérisation (60) disposées dans le réservoir de lait entier (18).

6. Système selon l'une des revendications 1 à 5, **caractérisé en ce qu'**il est prévu une première conduite de circulation (80), laquelle mène de la conduite de prélèvement (26) au réservoir de lait entier (18) et dans laquelle est disposée une pompe de circulation (82), de sorte que le liquide de nettoyage peut être renvoyé vers le réservoir de lait entier (18).

7. Système selon l'une des revendications 1 à 6, **caractérisé en ce que** le dépôt de lait entier (12) présente un dispositif de chauffage et/ou de refroidissement, une isolation thermique (24) et/ou un mélangeur (20).

8. Système selon la revendication 7, **caractérisé en ce que** le dispositif de chauffage du dépôt de lait entier (12) est conçu pour chauffer le lait entier situé dans l'un des deux réservoirs de lait entier (18) à une température de pasteurisation et pour le maintenir à la température de pasteurisation pour une durée prédéfinie.

9. Système selon l'une des revendications 1 à 8, **caractérisé en ce que** la commande (94) est conçue pour tenir compte du temps nécessaire à une pasteurisation lors de la définition du moment de remplissage (t5), dans lequel la pasteurisation peut être effectuée soit dans l'un des deux réservoirs de lait entier, soit dans un dispositif de pasteurisation externe.

10. Système selon l'une des revendications 1 à 9, **caractérisé en ce que** la conduite de nettoyage (44) se prolonge par deux sections de conduite de nettoyage (56) au niveau d'un point de ramification (54), lesquelles présentent respectivement une soupape d'arrêt (58) et mènent à l'un des deux réservoirs de lait entier (18).

11. Système selon l'une des revendications 1 à 10, **caractérisé en ce qu'**une pompe de lait entier (66) est disposée dans la conduite d'amenée de lait entier (62), et/ou un dispositif de chauffage (68), avec lequel un liquide amené par la conduite d'amenée de lait entier (62) peut être tempéré avant le remplissage du récipient de ration d'abreuvoir (70).

12. Système selon l'une des revendications 1 à 11, **caractérisé en ce que** la commande (94) présente une unité de notification (96) conçue pour informer un utilisateur d'un état du système à l'aide d'un affichage et/ou par envoi d'un message électronique.

13. Système selon l'une des revendications 1 à 12, **caractérisé en ce que** la commande (94) présente une unité de documentation (98) conçue pour documenter une opération de nettoyage.

14. Système selon l'une des revendications 1 à 13, **caractérisé en ce que** le dispositif d'amenée de produit de nettoyage présente une conduite de produit de nettoyage séparée (108), par laquelle du produit de nettoyage peut être amené à l'unité de préparation (14) à partir de l'au moins un récipient de produit de nettoyage (40) en contournant le dépôt de lait entier (12), et la commande est conçue pour exécuter automatiquement un nettoyage de l'unité de préparation (14) en fonction d'un programme prédéfini, dans lequel le dépôt de lait entier (12) n'est pas inclus.
